# EUROPÄISCHE PATENTSCHRIFT

(11) **EP 2 288 666 B1**
(45) Veröffentlichungstag und Bekanntmachung des Hinweises auf die Patenterteilung: **09.05.2012**
(21) Anmeldenummer: 09761149.5
(22) Anmeldetag: 10.06.2009
(51) Int. Cl.: C09D 11/10, C09D 11/00, C09D 11/02

(54) **HAFTUNGSVERMITTELNDER ZUSATZ FÜR EINE TINTE ZUM BEDRUCKEN VON GLAS**
ADHESION-PROMOTING ADDITIVE FOR AN INK FOR IMPRINTING GLASS
ADDITIF PROMOTEUR D'ADHÉRENCE POUR ENCRE UTILISÉE POUR IMPRIMER DU VERRE

(30) Priorität: 12.06.2008 AT 9452008
(43) Veröffentlichungstag der Anmeldung: 02.03.2011
(73) Patentinhaber: Durst Phototechnik Digital Technology GmbH, 9900 Lienz (AT)
(72) Erfinder: KAPPAUN, Stefan, A-8522 Groß Sankt Florian (AT); LIST, Emil J. W., A-8010 Graz (AT); GRAF, Michael, A-8600 Bruck an der Mur (AT)
(74) Vertreter: Burger, Hannes
(86) Internationale Anmeldenummer: PCT/AT2009/000232
(87) Internationale Veröffentlichungsnummer: WO 2009/149482

(56) Entgegenhaltungen:
- EP-A- 1 010 739
- WO-A-00/09332
- WO-A-01/32789
- DE-A1- 19 515 756
- US-A- 4 338 133
- US-A1- 2004 110 868
- FAN HONGYOU ET AL: "Rapid prototyping of patterned functional nanostructures" NATURE, NATURE PUBLISHING GROUP, LONDON, UK, Bd. 405, 4. Mai 2000 (2000-05-04), Seiten 56-60, XP002974935 ISSN: 0028-0836

## Beschreibung

Die Erfindung betrifft einen haftungsvermittelnden Zusatz für eine Tinte zum Bedrucken von Glas umfassend Silane, eine Tinte zumindest umfassend ein Lösungsmittel, ein Bindemittel und ein Pigment, ein Verfahren zum Bedrucken einer Oberfläche eines Glases mit einem Tintenstrahldrucker, wobei Tinte in Form von Tröpfchen auf die Oberfläche des Glases aufgebracht wird, sowie die Verwendung des Zusatzes.

Die Dekoration bzw. das Beschriften ("Labeln") von Gläsern und Glasprodukten spielt in vielen Geschäftsfeldern eine wichtige Rolle. So herrscht große Nachfrage in der Architektur nach individuell gestalteten Gläsern sowohl für Innen- als auch Außenanwendungen, im Automotive Bereich, in der Werbung, im Bereich der Dekoration von Haushaltsgegenständen, usw. Während große Mengen an gleich bedruckten Gläsern und Glasprodukten üblicherweise mittels Siebdruckverfahren realisiert werden, stellen Tintenstrahldrucker-Anwendungen für das Bedrucken von individuell gestalteten Gläsern in Kleinchargen bzw. bei häufig wechselnden Motiven eine interessante Alternative dar.

Für den dekorativen Tintenstrahldruck auf verschiedenen Substraten, wie z.B. Kunststoffen, Papier, usw., existiert eine Vielzahl an pigmentierten organischen Tintenformulierungen, welche thermisch oder durch UV-Bestrahlung ausgehärtet werden können. Trotz der Fülle an verfügbaren Tinten weisen diese Formulierungen jedoch deutliche Nachteile bezüglich ihrer Haftung auf Glas, ihrer Kratzfestigkeit und Widerstandsfähigkeit gegenüber Wasser bzw. Lösungsmitteln auf.

Alternative Ansätze sehen das Einbrennen von anorganisch pigmentierten Tinten vor. Diese Formulierungen, welche neben den Pigmenten und anderen typischen Tintenbestandteilen auch häufig Glasfritten (z.B. Bismutoxid, bleihältige Materialien, usw.) enthalten, zeigen zwar nach dem Brennprozess eine gute Beständigkeit gegenüber Abrasion und der Einwirkung von Wasser bzw. Lösungsmitteln, sind aber aufgrund der Toxizität einiger Pigmente und Glasfritten, der schwierigen Vermahlung der Pigmente und Glasfritten, sowie durch den komplizierten Einbrennprozess in ihrer Anwendung unwirtschaftlicher oder gesundheitlich bedenklich.

Aus diesen Gründen wurde für viele Anwendungen, welche weniger strenge Anforderungen an Haftung und Kratzfestigkeit stellen, versucht, UV- oder thermisch härtbare organische Graphiktinten so zu modifizieren, dass die für den Glasdruck geforderten Kriterien hinreichend erfüllt werden. Dabei wurden verschiedene Lösungsstrategien verfolgt, darunter besonders die Zumischung von organischen Polymeren (z.B. Novolack-Harze, Silikon-Harze) zur Erhöhung der Kratzfestigkeit. Ebenso wurde versucht, die Stabilität des Glasdruckes durch die Aufbringung diverser Primer (z.B. Pyrosil®) zu erhöhen. Auch die Beimengung von Silanen zur kovalenten Anbindung des Druckmusters an die Glasoberfläche ist aus dem Stand der Technik bekannt.

So beschreibt z.B. die DE 696 030256 T2 eine Tintenzusammensetzung für einen Tintenstrahldrucker, die eine verbesserte Haftung und Abriebfestigkeit auf Glas, PET oder Aluminium unter Feuchtbedingungen aufweist. Die Zusammensetzung umfasst ein organisches Lösungsmittel, ein flexibles thermoplastisches Polyurethanharz, ein farbgebendes Mittel, ein Silikonharz und ein Silan. Der Anteil des Silans beträgt zwischen 0,5 Gew.-% und 2,5 Gew.-%. Als Silane werden Epoxyalkyloxysilane und Aminoalkylalkoxysilane genannt.

Aus der DE 697 01 873 T2 ist eine Tintenstrahldruckfarbe für das Markieren von Behältern, wie Flaschen bekannt, die während des Bedruckens einen Kondensationsfilm auf ihrer Oberfläche aufweisen können. Um diesem Problem zu begegnen, wird der Druckfarbe ein Alkoxysilanpolyalkylenimin als Adhäsionsbeschleuniger zugesetzt.

Der vorliegenden Erfindung liegt die Aufgabe zugrunde, die Anwendbarkeit des Tintenstrahldruckes auf Glasoberflächen zu verbessern

Diese Aufgabe der Erfindung wird jeweils unabhängig dadurch gelöst, dass in dem eingangs genannten Zusatz zumindest ein Netzwerkbildner auf Basis eines organischen Esters der o-Kieselsäure sowie je ein Silan, das als funktionelle Gruppe eine Epoxid-, eine Amino- und eine Methacrylsäuregruppe aufweist, enthalten sind, wobei ein Mengenverhältnis dieser Silane ausgewählt ist aus dem Bereich 1 : 0,5 : 50 bis 1 : 1 : 1, durch die Tinte, welche diesen Zusatz enthält, weiters durch das Verfahren, welches diese Tinte verwendet, sowie durch die Verwendung des Zusatzes als Beimengung zu einer Tinte für den Tintenstrahldruck.

Durch die Verwendung eines Esters der o-Kieselsäure wird einerseits erreicht, dass ein dem Werkstoff Glas ähnlicher Netzwerkbildner vorhanden ist, wodurch teilweise die Struktur des Glases nachempfunden werden kann, andererseits kann über die Variation der Estergruppen die Eng- bzw. Weitmaschigkeit des Netzwerkes und damit die mechanische Belastbarkeit beeinflusst werden. Somit kann die Tinte an die jeweiligen Erfordernisse, beispielsweise die Entfernbarkeit einerseits für das Bedrucken von Flaschen und andererseits die Dauerhaftigkeit des Druckes, das heißt die Abriebbeständigkeit, für Dekorgläser, einfach angepasst werden.

Es kann damit auch eine verbesserte Widerstandsfähigkeit des Druckes gegenüber Wasser erreicht werden. Insbesondere wird durch den erfindungsgemäßen Zusatz durch den erzielbaren Vernetzungsgrad bzw. die Quervernetzung die Kratzfestigkeit des Druckes verbessert.

Über die silanbasierende, vernetzende Komponente wird einerseits eine kovalente Anbindung des Druckes an die Hydroxylgruppen der Glasoberfläche und andererseits damit auch zumindest teilweise die Vernetzung mit der Tinte und gegebenenfalls des Esters der o-Kieselsäure erreicht, wodurch eine höhere Abriebbeständigkeit erzielt werden kann. Bevorzugt ist der Ester der o-Kieselsäure ausgewählt aus einer Gruppe von Verbindungen der allgemeinen Formel SiO₄R^{u}R^{v}R^{w}R^{x}, wobei R^{v}, R^{w}, R^{x} jeweils gebildet sind durch H oder eine C1-C8 Gruppe und R^{u} eine C1-C8 Gruppe ist. Diese C1-C8 Gruppen können zusätzlich auch funktionelle Reste, wie z.B. Acrylate, Glycole, Amine, Ester, Amide, Säuren, Epoxide, etc. tragen. Insbesondere mit diesen Substanzen wird eine deutliche Verbesserung der Kratzfestigkeit erhalten, da damit ein hoher Vernetzungsgrad bei einem relativ engmaschigen Netzwerk erreichbar ist.

Der Esters der o-Kieselsäure wird dem Zusatz bevorzugt in einem Anteil zugesetzt, der ausgewählt ist aus einem Bereich mit einer unteren Grenze von 1 Gew.-% und einer oberen Grenze von 90 Gew.-%. Unterhalb von 1 Gew.-% ist das Vernetzungsverhalten zwar vorhanden, aber nicht ausgeprägt genug um die Kratzfestigkeit wesentlich zu verbessern.

Oberhalb von 90 Gew.-% konnte keine weitere Verbesserung in Hinblick auf die Kratzfestigkeit beobachtet werden. Obwohl dieser Bereich des Mengenanteils sehr breit gefasst ist, ist dazu anzumerken, dass geringere Gehalte an dem Ester vorzugsweise für entfernbare Aufdrucke z.B. auf Flaschen eingesetzt werden, wo zwar eine verbesserte Kratzfestigkeit erwünscht ist, diese jedoch nicht dauerhaft sein muss, während höhere Gehalte bis zur oberen Grenze des angegebenen Bereichs vorzugsweise für Gläser verwendet werden, die normalerweise eine längere Gebrauchsdauer aufweisen.

Der Anteil des Esters der o-Kieselsäure an dem Zusatz kann insbesondere auch ausgewählt sein aus einem Bereich mit einer unteren Grenze von 5 Gew.-% und einer oberen Grenze von 80 Gew.-% bzw. aus einem Bereich mit einer unteren Grenze von 20 Gew.-% und einer oberen Grenze von 60 Gew.-%.

Im Rahmen der Erfindung ist es weiters möglich, dass ein Teil des Esters der o-Kieselsäure durch ein organisches Polymer bzw. dessen monomere Vorstufen ersetzt ist. Es kann damit nicht nur das Vernetzungsverhalten des Zusatzes bzw. der damit versehenen Tinte beeinflusst werden, um die Druckbarkeit der Tinte zu verbessern, sondern können damit auch weitere Eigenschaften der Tinte, wie z.B. Flexibilität, Verlaufverhalten, variiert werden. Auch die Kostenstruktur des Zusatzes ist damit positiv veränderbar.

Obwohl es im Rahmen der Erfindung möglich ist, als organisches Polymer bzw. dessen monomere Vorstufen die für Grafiktinten bekannten Polymere einzusetzen, hat es sich aufgrund der funktionellen Gruppen der Polymere deren monomeren Vorstufen als Vorteil erwiesen, wenn das organische Polymer bzw. dessen monomere Vorstufe ausgewählt ist aus einer Gruppe umfassend Acrylate, Silikone, Polyurethane, Polyamidharze, Polyimidharze.

Der Anteil des organischen Polymers bzw. der monomern Vorstufe am Zusatz kann dabei ausgewählt sein aus einem Bereich mit einer unteren Grenze von 0,5 Gew.-% und einer oberen Grenze von 50 Gew.-%. Unterhalb von 0,5 Gew.-% ist der gewünschte Effekt zu gering, sodass der teilweise Ersatz des Esters durch das organische Polymer bzw. dessen monomere Vorstufe aufgrund des größeren Handhabungsaufwandes höhere Kosten verursacht, als der damit verbundene Gewinn an Qualität des Zusatzes ist. Oberhalb von 50 Gew.-% konnte eine Verschlechterung der Kratzfestigkeit des Druckbildes beobachtet werden, welche die mit dem Ersatz gewonnen positiven Eigenschaften nicht aufwiegen können.

Der Anteil des organischen Polymers bzw. dessen monomere Vorstufe am Zusatz kann insbesondere auch ausgewählt sein aus einem Bereich mit einer unteren Grenze von 5 Gew.-% und einer oberen Grenze von 40 Gew.-% bzw. aus einem Bereich mit einer unteren Grenze von 10 Gew.-% und einer oberen Grenze von 30 Gew.-%.

Von Vorteil ist es dabei, wenn die funktionelle Gruppe endständig am Silan angeordnet ist, da damit eine höhere Vemetzungsgeschwindigkeit erreichbar ist, und somit des Druckbild eine höhere Qualität aufweist, da eine geringere Gefahr besteht, dass die Tinte auf dem Glas vor dem Härten verläuft.

Insbesondere bevorzugt werden aus diesen Gründen 3-Glycidyloxypropyltrimethoxysilan und/oder 3-Aminopropyltriethoxysilan und/oder 3-Methacryloxypropyltrimethoxysilan.

Der Anteil des zumindest einen Silans kann ausgewählt sein aus einem Bereich mit einer unteren Grenze von 1 Gew.-% und einer oberen Grenze von 80 Gew.-%. Unterhalb von 1 Gew.-% ist die Haftung der Tinte auf dem Glas deutlich verringert. Zudem wird, nachdem das Silan als vernetzende Komponente wirkt, auch das Vernetzungsverhalten des Zusatzes bzw. der damit versehenen Tinte verschlechtert. Oberhalb von 80 Gew.-% werden spröde Druckmuster erhalten, welche bei mechanischer oder thermischer Belastung zur Rissbildung neigen.

Der Anteil des zumindest einen Silans kann insbesondere ausgewählt sein aus einem Bereich mit einer unteren Grenze von 5 Gew.-% und einer oberen Grenze von 70 Gew.-% bzw. aus einem Bereich mit einer unteren Grenze von 8 Gew.-% und einer oberen Grenze von 50 Gew.-%.

Das Mengenverhältnis der Silane, die als funktionelle Gruppe eine Epoxid-, Amin- und eine Methacrylsäuregruppe aufweisen kann auch ausgewählt sein aus einem Bereich mit einer unteren Grenze von 1 : 0,2 : 5 und einer oberen Grenze von 1 : 0,5 : 5 bzw. aus einem Bereich mit einer unteren Grenze von 1 : 0,1 : 1 und einer oberen Grenze von 1 : 0,4 : 5.

Die Härtungseigenschaften der erfindungsgemäßen Tinte können damit verbessert werden, indem dem Zusatz zumindest ein UV-Initiator und/oder ein thermischer Initiator zugemischt wird. Durch diesen Initiator kann der Vernetzungsgrand bzw. die Aushärtungscharakteristik des Druckbildes gesteuert werden. Es kann damit aber auch die Nachhärtung beschleunigt werden, sofern diese durchgeführt wird.

Der Initiator kann dabei in einem Anteil enthalten sein, der ausgewählt ist aus einem Bereich mit einer unteren Grenze von 0,5 Gew.-% und einer oberen Grenze von 25 Gew.-%. Unterhalb von 0,5 Gew.-% wurde zwar ein verbessernder Effekt beobachtet, allerdings nur in einem geringen Umfang. Oberhalb von 25 Gew.-% wird der Vernetzungsgrad zu hoch und damit - obwohl die Kratzfestigkeit bei höheren Gehalten noch verbessert werden kann - die Härte des Druckbildes zu groß. Ebenfalls führt eine weitere Erhöhung des Initiatorgehaltes zu einer deutlichen Kostenvergrößerung.

Der Initiator kann insbesondere in einem Anteil enthalten sein, der ausgewählt ist aus einem Bereich mit einer unteren Grenze von 2 Gew.-% und einer oberen Grenze von 10 Gew.-% bzw. ausgewählt ist aus einem Bereich mit einer unteren Grenze von 5 Gew.-% und einer oberen Grenze von 15 Gew.-%.

Um die Haftung bzw. die kovalente Anbindung des Druckbildes auf der Glasoberfläche zu verbessern, kann vorgesehen sein, dass der Zusatz zumindest ein Tensid enthält. Durch das Tensid wird die Oberfläche besser vorbereitet, insbesondere die Grenzflächenspannung herabgesetzt, wodurch auch der Druck auf Glasoberflächen mit einem anhaftenden Kondensatfilm besser durchgeführt werden kann. Zudem kann durch das Tensid die Eintrübung des Zusatzes vermieden werden, wenn dieser in flüssiger Form vorliegt, womit höhere Anteile an Zusatz zur Tinte ermöglicht werden. Es kann damit auch die Lagerstabilität des Zusatzes verbessert werden.

Im Rahmen der Erprobung des Zusatzes hat sich dabei als vorteilhaft herausgestellt, wenn der Anteil des Tensids bzw. einer Tensidmischung an dem Zusatz ausgewählt ist aus einem Bereich mit einer unteren Grenze von 1 Gew.-% und einer oberen Grenze von 60 Gew.-%.

Insbesondere kann dieser Anteil auch ausgewählt sein aus einem Bereich mit einer unteren Grenze von 5 Gew.-% und einer oberen Grenze von 15 Gew.-% bzw. aus einem Bereich mit einer unteren Grenze von 20 Gew.-% und einer oberen Grenze von 50 Gew.-%.

Gemäß einer Ausführungsvariante der Tinte ist vorgesehen, dass der Zusatz in einem Anteil enthalten ist, der ausgewählt ist aus einem Bereich mit einer unteren Grenze von 5 Gew.-% und einer oberen Grenze von 70 Gew.-%. Unterhalb von 5 Gew.-% wurde beobachtet, dass die Haftung des Druckbildes an der Glasoberfläche zu gering ist und dass die Kratzfestigkeit nicht mehr gegeben ist. Oberhalb von 70 Gew.-% steigt die Härte de Druckes überproportional an, sodass das Druckbild spröde und rissig wird.

Der Zusatz kann insbesondere auch in einem Anteil enthalten sein, der ausgewählt ist aus einem Bereich mit einer unteren Grenze von 10 Gew.-% und einer oberen Grenze von 65 Gew.-% bzw. aus einem Bereich mit einer unteren Grenze von 15 Gew.-% und einer oberen Grenze von 55 Gew.-%.

Einerseits um der Tinte ein angemessenes Verlaufverhalten auf dem Glas zu verleihen (d.h. die hinreichende Benetzung zu gewährleisten), jedoch großflächiges Verlaufen und damit die Verschlechterung der Qualität des Druckes vermeidet, und andererseits um das Verkleben der Druckerdüsen zu verhindern, ist es von Vorteil, wenn in der Tinte zumindest ein Viskositätsregler enthalten ist, wobei ein Mengenverhältnis der Gesamtmenge an Viskositätsregler zur Menge an Zusatz ausgewählt ist aus einem Bereich mit einer unteren Grenze von 0,1 : 1 und einer oberen Grenze von 3 : 1.

Dieses Verhältnis kann dabei insbesondere ausgewählt sein aus einem Bereich mit einer unteren Grenze von 1 : 1 und einer oberen Grenze von 2 : 1 bzw. aus einem Bereich mit einer unteren Grenze von 0,5 : 1 und einer oberen Grenze von 1,5 : 1.

Um eine hinreichende Verfestigung der Tintenmatrix zu erreichen bzw. auch den simultanen Druck mehrerer Farben zu ermöglichen, ist es von Vorteil, wenn die Tinte nach dem Auftragen auf die Oberfläche des Glases thermisch und/oder mittels UV-Strahlung fixiert oder gehärtet wird. Die vollständige Durchhärtung (inklusive der kovalenten Anbindung an die Glasoberfläche) kann in einem thermischen Nachhärtungsschritt erfolgen.

Diese thermische Nachhärtung kann dabei über eine Zeitdauer durchgeführt werden, die ausgewählt ist aus einem Bereich mit einer unteren Grenze von 30 Sekunden und einer oberen Grenze von 15 Minuten. Unterhalb von 30 Sekunden konnte kein ausreichender Effekt der Nachhärtung beobachtet werden. Oberhalb von 15 Minuten konnte keine weitere Verbesserung des Nachhärtungseffekts beobachtet werden.

Die Nachhärtung kann auch für eine Zeitdauer durchgeführt werden, die ausgewählt ist aus einem Bereich mit einer unteren Grenze von 3 Minuten und einer oberen Grenze von 12 Minuten bzw. aus einem Bereich mit einer unteren Grenze von 5 Minuten und einer oberen Grenze von 10 Minuten.

Bevorzugt wird die thermische Nachhärtung bei einer Temperatur durchgeführt, die ausgewählt ist aus einem Bereich mit einer unteren Grenze von 100 °C und einer oberen Grenze von 250 °C. Unterhalb von 100 °C wird zwar eine Nachvernetzung erreicht, jedoch nur langsam, sodass die Behandlungszeit ohne zusätzliche Maßnahmen zu treffen entsprechend verlängert werden muss. Oberhalb von 250 °C konnte keine weitere Steigerung des Effektes der Nachvernetzung beobachtet werden. Zudem ist bei weiterer Temperaturerhöhung auf die richtige Auswahl der Tintenzusammensetzung zu achten, da sich diese u.U. bei höheren Temperaturen zersetzen kann (z.B. pyrolytische Reaktionen, Abdampfen von Tintenbestandteilen vor der Vernetzung, usw.). Angemerkt sei hier, dass der erfindungsgemäße Zusatz auch hinsichtlich der Temperaturbelastbarkeit Vorteile im Vergleich zu Kohlenstoff-basierenden Zusätzen aufweist welche bei erhöhten Temperaturen häufig zu thermischen Abbaureaktionen, etc. neigen.

Zum besseren Verständnis der Erfindung wird diese anhand der nachfolgenden Beschreibung und Beispiele näher erläutert.

Einführend sei festgehalten, dass sämtliche Angaben zu Wertebereichen in gegenständlicher Beschreibung so zu verstehen sind, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Wie bereits einführen ausgeführt, wird der erfindungsgemäße Zusatz bevorzugt für Tinten, insbesondere Grafiktinten, zum Bedrucken von Glas verwendet. Derartige Tinten können aber auch zum Bedrucken von anderen Werkstoffen mit glatten Oberflächen, die ähnliche Eigenschaften wie Glas aufweisen verwendet werden, beispielsweise verschiedene Kunststoffe.

Mit Ausnahme des Zusatzes besteht die Tinte aus üblichen Komponenten. So können die aus dem Stand der Technik bekannten Farbstoffe oder Pigmente verwendet werden. Insbesondere werden für einen Farbdruck die Farben Cyan, Magenta, Gelb und Schwarz verwendet. Geeignete Farbstoffe sind z.B. in den voranstehend zitierten Dokumenten zum Stand der Technik genannt.

Die farbgebenden Mittel sind in einem organischen Lösungsmittel gelöst oder dispergiert. Geeignete Lösungs- bzw. Dispersionsmittel sind verschiedene Alkohole, wie z.B. Methanol, Ethanol, Isopropanole, Butanole, sowie höhere Homologe; Ketone, wie z.B. Aceton, Methylethylketon, Cyclohexanon, etc.; Glycole, wie z.B. Ethylenglycol, Propylenglycol, Glycerin; Ester, wie, z.B. Ethylacetat, Propylacetat, Butylacetat, Amylacetat. Prinzipiell sind auch die Lösungsmittel aus dem zitierten Stand der Technik bekannt, auf den hiermit verwiesen wird. Es sind aber auch Mischungen von verschiedenen Lösungsmitteln einsetzbar.

Die bekannten Tinten können weiters ein Bindemittel in Form eines Polymerharzes, beispielsweise ein Polyurethan, Harze mit Carboxyl-, Sulfon- oder Phosphonsäuregruppen, Acrylate, Vinyle, Polyester, Amide, Phenole, Polycarbonate, Epoxide, Polyketone, etc. enthalten. Es sei auch hierzu auf den Stand der Technik verwiesen.

Weiters können verschieden Additive, wie z.B. Mittel zur Einstellung der Leitfähigkeit, Benetzungsmittel, Feuchthaltemittel, Entschäumer, etc. enthalten sein.

Es sei daher zu den üblichen Inhaltsstoffen von Tinten für den Tintenstrahldruck auf die zahlreiche einschlägige Literatur verwiesen, um unnötige Wiederholungen zu vermeiden.

Der erfindungsgemäße Zusatz besteht in seiner einfachsten Ausführung aus zumindest einem Silan und zumindest einem organischen Ester der o-Kieselsäure. Das zumindest eine Silan wirkt dabei insbesondere als vernetzende Komponente und als Haftvermittler für die Tinte, der Ester wirkt als Netzwerkbildner und ebenfalls als Haftvermittler zur Glasoberfläche.

Mit "Silan" sind im Rahmen der Erfindung Verbindungen gemeint, in denen mindestens eine, üblicherweise zwei, drei oder vier Alkoxygruppen direkt über den Sauerstoff an das SiliciumAtom gebunden sind. Silane haben die Eigenschaft, bei Kontakt mit Feuchtigkeit zu hydrolysieren. Dabei bilden sich Silanole (Si-OH-Gruppen) und durch nachfolgende Kondensationsreaktionen Siloxane (Si-O-Si-Gruppen).

Im Rahmen der Erfindung werden Silane verwendet, die bevorzugt wasserfrei sind, wobei wasserfrei bedeutet, dass geringe Spuren von Wasser enthalten sein können, d.h. ein Restwassergehalt von maximal 1 Gew.-%, insbesondere von maximal 0.5 Gew.-%, vorhanden ist. In Abhängigkeit von der Hydrolyseempfindlichkeit der Silane sind ggf. auch Silane mit größerem Wassergehalt einsetzbar.

Bevorzugt werden Silane verwendet, die zumindest eine funktionelle Gruppe aufweisen, die ausgewählt ist aus einer Gruppe umfassend Epoxidgruppen, Amingruppen, (Meth)acrylsäuregruppen oder Mercaptogruppen, wobei insbesondere solche Silane bevorzugt werden, die zumindest eine funktionelle Gruppe endständig im Molekül aufweisen.

Selbstverständlich können auch Silane mit mehreren funktionellen Gruppen verwendet werden. Besonders bevorzugt wird ein Silan verwendet, das eine funktionelle Gruppe aufweist, welche auf die funktionelle Gruppe des polymeren Bindemittels abgestimmt ist (z.B. Acrylate als funktionelle Gruppen, etc.).

Besonders bevorzugt werden im Rahmen der Erfindung 3-Glycidyloxypropyltrimethoxysilan, 3-Aminopropyltriethoxysilan und 3-Methacryloxypropyltrimethoxysilan. Diese können beispielsweise bei Sigma-Aldrich oder ABCR unter den genannten Bezeichnungen bezogen werden.

Es sind jedoch auch andere Silane verwendbar, beispielsweise insbesondere substituierte Alkoxysilane, wie z.B. Epoxyalkyloxysilane; Aminoalkylalkyloxysilane, wie z.B. 4-Aminopropyltriethoxysilan, [γ-(βAminoethyl-amino)-propyl]-trimethoxysilan; Vinyltris-(β-methoxyethoxy)-silan, (γ-Methacryloxypropyl)-trimethoxysilan, Aminosilane der Formel 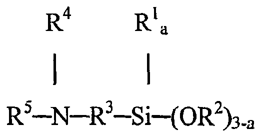 wobei R¹, R² und R³ eine Alkylgruppe mit 1 bis 8 C-Atomen ist, insbesondere eine Methyl-, eine Ethyl- oder eine Isopropylgruppe, R⁴ und R⁵ ein H oder eine Alkylgruppe mit 1 bis 8 C-Atomen ist, insbesondere eine Methyl-, eine Ethyl- oder eine Isopropylgruppe. Anstelle der Alkylgruppen kann auch zumindest ein Rest durch eine Alkylengruppe mit 1 bis 8 C-Atomen vorhanden sein. Der Index a steht für einen Wert 0, 1 oder 2, insbesondere für 0 oder 1. Bevorzugt steht a für 0.

Beispiele für derartige Aminosilane sind 3-Aminopropyltrimethoxysilan, 3-Aminopropyldimethoxymethylsilan, 3-Amino-2-methylpropyltrimethoxysilan, 4-Aminobutyltrimethoxysilan, 4-Aminobutyldimethoxymethylsilan, 4-Amino-3-methylbutyltrimethoxy-silan, 4-Amino-3,3-dimethylbutyltrimethoxysilan, 4-Amino-3,3-dimethylbutyldimethoxy-methylsilan, 2-Aminoethyltrimethoxysilan, 2-Aminoethyldimethoxymethylsilan, Aminomethyltrimethoxysilan, Aminomethyldimethoxymethylsilan, Aminomethylmethoxydimethylsilan, N-Methyl-3-Aminopropyltrimethoxysilan, N-Ethyl-3-Aminopropyltrimethoxysilan, N-Butyl-3-Aminopropyltrimethoxysilan, N-Cyclohexyl-3-Aminopropyltrimethoxysilan, N-Phenyl-3-Aminopropyltrimethoxysilan, N-Methyl-3-Amino-2-methyl-propyltrimethoxysilan, N-Ethyl-3-Amino-2-methylpropyltrimethoxysilan, N-Ethyl-3-Aminopropyldimethoxymethylsilan, N-Phenyl-4-Aminobutyltrimethoxysilan, N-Phenylaminomethyldimethoxymethylsilan, N-Cyclohexylaminomethyldimethoxymethylsilan, N-Methylaminomethyldimethoxymethylsilan, N-Ethylaminomethyldimethoxymethylsilan, N-Propylaminomethyldimethoxymethylsilan, N-Butylaminomethyldimethoxymethylsilan, N-(2-Aminoethyl)-3-aminopropyltrimethoxysilan, sowie deren Analoga mit Ethoxy- oder Isopropoxygruppen anstelle der Methoxygruppen am Silicium.

In einer Ausführungsform kann das verwendete Aminosilan ein Reaktionsprodukt eines Aminosilans der voranstehend genannten Formel sein, das mindestens eine sekundäre oder primäre Aminogruppe aufweist, mit einer Verbindung mit mindestens einer funktionellen Gruppe, welche mit einer primären oder sekundären Aminogruppe reagieren kann, beispielsweise die in dieser Beschreibung genannten Epoxysilane.

Weitere verwendbare Epoxysilane sind solche der Formel

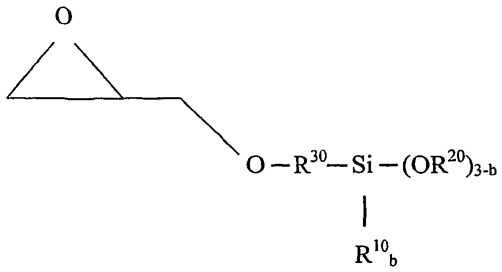

R¹⁰, R²⁰ stehen hierbei für eine Alkylgruppe mit 1 bis 6 C-Atomen, bevorzugt für eine Methyl-, Ethyl oder Propylgruppe, beispielsweise Isopropylgruppe. R³⁰ steht für eine Alkylengruppe mit 1 bis 6 C-Atomen und b für 0, 1 oder 2, insbesondere für 0 oder 1.

Beispiele für derartige Epoxysilane sind 2-(3,4-Epoxycyclohexyl)-ethyltrimethoxysilan, 2-(3,4-Epoxycyclohexyl)-ethyltriethoxysilan, 3-Glycidyloxypropyltriethoxysilan und 3-Glycidyloxypropyltrimethoxysilan.

Das Mercaptosilan kann beispielsweise ein 3-Mercaptopropyltrimethoxysilan oder ein 3-Mercaptopropyltriethoxysilan sein.

Das Silan ist in dem Zusatz in einem Mengenanteil enthalten der ausgewählt ist aus einem Bereich mit einer unteren Grenze von 1 Gew.-% und einer oberen Grenze von 80 Gew.-%. Insbesondere ist 3-Glycidyloxypropyltrimethoxysilan in einem Anteil enthalten der ausgewählt ist aus einem Bereich mit einer unteren Grenze von 1 Gew.-% und einer oberen Grenze von 50 Gew.-%, 3-Aminopropyltriethoxysilan in einem Anteil enthalten der ausgewählt ist aus einem Bereich mit einer unteren Grenze von 1 Gew.-% und einer oberen Grenze von 50 Gew.-% bzw. 3-Methacryloxypropyltrimethoxysilan in einem Anteil enthalten der ausgewählt ist aus einem Bereich mit einer unteren Grenze von 1 Gew.-% und einer oberen Grenze von 80 Gew.-%, wenn diese Silane einzeln verwendet werden.

Generell sei an dieser Stelle angemerkt, dass sich sämtliche Angaben zu Mengenanteilen des Zusatzes auf die jeweilige gesamte Zusammensetzung beziehen, außer es wird speziell auf eine Abweichung hiervon hingewiesen.

Es sind auch Mischungen verschiedener Silane verwendbar, wie dies bereits angedeutet wurde. Besonders bevorzugt werden Mischungen von 3-Glycidyloxypropyltrimethoxysilan oder 3-Aminopropyltriethoxysilan oder 3-Methacryloxypropyltrimethoxysilan mit 3-Glycidyloxypropyltrimethoxysilan und 3-Aminopropyltriethoxysilan und/oder 3-Methacryloxypropyltrimethoxysilan.

Wenn eine Mischung von Silanen verwendet wird, welche als funktionelle Gruppen eine Epoxid-, eine Amin- und eine Methacrylsäuregruppe aufweisen, kann ein Mengenverhältnis dieser Silane ausgewählt sein aus einem Bereich mit einer unteren Grenze von 1 : 0,1 : 50 und einer oberen Grenze von 1 : 1 : 1.

Neben dem zumindest einen Silan enthält der erfindungsgemäße Zusatz zumindest einen organischen Ester der o-Kieselsäure der allgemeinen Formel 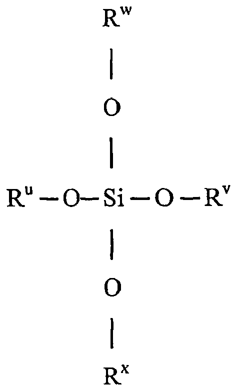 wobei R^{v}, R^{w}, R^{x} jeweils gebildet sind durch H oder eine C₁-C₈ Gruppe und R^{u} eine C₁-C₈ Gruppe ist. Diese Reste können also durch eine Methyl-, eine Ethyl-, eine Propyl, eine Butyl-, eine Pentyl-, eine Hexyl-, eine Heptyl- oder eine Oktylgruppe gebildet sein. Es sind sowohl die linearen als auch die verzeigten Vertreter dieser Alkylgruppen möglich. Des Weiteren können von diesen höheren homolgen C-Gruppen auch die jeweils einfach oder mehrfach ungesättigten Vertreter eingesetzt werden, wobei durch die Doppelbindungen zusätzliche reaktive Zentren für die Vernetzung zur Verfügung stehen.

Besonders bevorzugt wird als Ester der o-Kieselsäure Tetramethylorthosilikat, Tetraethylorthosilikat oder Tetrapropylorthosilikat verwendet, um einen zumindest annähernd symmetrischen Aufbau des Netzwerkes zu erhalten.

Weitere Beispiele sind Trimethylethylorthosilikat, Dimethyldiethylorthosilikat, Methyltriethylorthosilikat, Triethylpropylorthosilikat, Diethyldiproylorthosilikat, Ethyltripropylorthosilikat, Trimethylproylorthosilikat, Dimethyldiproylorthosilikat, Methyltriproylorthosilikat oder Mischungen daraus.

Derartige o-Silikate können beispielsweise unter den genannten Bezeichnungen bei Sigma-Aldrich oder ABCR bezogen werden. Eine Möglichkeit der Herstellung wird z.B. in Hector, A. L. Chem. Soc. Rev. 2007, 36, 1745 -1753 oder Mackenzie, J. D.; Bescher, E. P. Acc. Chem. Res. 2007, 40, 810 - 818 beschrieben.

Der Anteil des zumindest einen Orthosilikats an dem erfindungsgemäßen Zusatz kann ausgewählt werden aus einem Bereich von 1 Gew.-% bis 90 Gew.-%.

Ein Teil des Esters der o-Kieselsäure kann durch ein organisches Polymer bzw. deren Monomervorstufen ersetzt sein, insbesondere durch Acrylate, Silikone, Polyurethane, Polyamidharze, Polyimidharze. Beispiele hierfür sind Methylmethacrylat, Dimethylaminoethylmethacrylat, Trimethylolpropantriacrylat, Di(trimethylolpropan)-tetraacrylat, Trimethylolpropantrimethacrylat, Poly(propylenglycol)diacrylat, Polyisopren-graft-maleinsäuremonomethylester, Poly(methylvinylether-alt-maleinsäuremonobutyl-ester) sowie Copolymere daraus.

Besonders bevorzugt werden Trimethylolpropantriacrylat, Di(trimethylolpropan)tetraacrylat und Trimethylolpropantrimethacrylat.

Der Anteil dieses zumindest einen Polymers an dem Zusatz kann zwischen 0,5 Gew.-% und 50 Gew.-% betragen.

Der Zusatz kann weiters zumindest ein Tensid enthalten. Als Tenside können anionische, kationische, nichtionische oder ampholytische Tenside oder deren Mischungen verwendet werden.

Beispiele für anionische Tenside sind Carboxylat-, Sulfat-, Phosphat- oder Sulfonat-Gruppen aufweisende Tenside, wie zum Beispiel Aminsäurederivate, Fettalkoholethersulfate, Fettalkoholsulfate, Seifen, Alkylphenolethoxylate, Fettalkoholethoxylate, aber auch Alkansulfonate, Olefinsulfonate oder Alkylphosphate.

Beispiele für nichtionische Tenside sind Ethoxylate, wie zum Beispiel ethoxylierte Additionsprodukte von Alkoholen, wie beispielsweise Polyoxyalkylenpolyole, Amine, Fettsäuren, Fettsäureamide, Alkylphenole, Ethanolamide, Fettamine, Polysiloxane oder Fettsäureester, aber auch Alkyl- oder Alkylphenylpolyglykolether, wie zum Beispiel Fettalkoholpolyglykolether, oder Fettsäureamide, Alkylglykoside, Zuckerester, Sorbitanester, Polysorbate oder Trialkylaminoxide, aber auch Ester und Amide aus Poly(meth)acrylsäuren mit Polyalkylenglykolen oder Aminopolyalkylenglykole, die allenfalls einseitig mit Alklygruppen abgeschlossen sein können.

Beispiele für kationische Tenside sind quaternäre Ammonium- oder Phosphoniumverbindungen, wie zum Beispiel Tetraalkylammoniumsalze, N,N-Dialkylimidazolinverbindungen, Dimethyldistearylammoniumverbindungen, oder N-Alkylpyridinverbindungen, insbesondere aber Ammoniumchloride.

Zu den ampholytischen Tensiden gehören amphotere Elektrolyte, so genannte Ampholyte, wie zum Beispiel Aminocarbonsäuren und Betaine.

Derartige Tenside sind kommerziell breit erhältlich.

Von Vorteil ist, wenn das Tensid wasserfrei ist, um die vorzeitige Hydrolyse der Silane zu vermeiden.

Der Anteil des Tensids kann ausgewählt sein aus einem Bereich von 0,5 Gew.-% bis 50 Gew.-%.

Es sei an dieser Stelle angemerkt, dass das Tensid gegebenenfalls auch in der Tinte enthalten sein kann, bzw. dass sowohl der Zusatz als auch die Tinte zumindest ein Tensid enthalten können.

Für den Fall, dass das zumindest eine Tensid im Zusatz enthalten ist, ist es zur Verbesserung der Haftung der Tinte auf Glas von Vorteil, wenn das Verhältnis von Silan zu Tensid zwischen 5:1 und 1:2 beträgt, insbesondere einen Wert zwischen 3:1 bis 2:3 aufweist.

Als weiteren Bestandteil kann der Zusatz zumindest einen UV-Initiator und/oder einen thermischen Initiator enthalten. Beispiele hierfür sind Irgacure^{®}, verschiedene Phenone, verschiedene Benzoine, usw. beziehungsweise Azobisisobutyronitril, 1,1'-Azobis(cyclohexancarbonitril), t-Butyl hydroperoxid, m- Chloroperbenzoesäure, Dibenzoyl peroxid, Di-t-butyl peroxid, usw.

Dieser Initiator bzw. eine Initiatormischung daraus kann in einem Anteil von 0,5 Gew.-% bis 25 Gew.-% enthalten sein.

Der erfindungsgemäße Zusatz wird einer Tinte, insbesondere einer Grafiktinte in einem Ausmaß zwischen 5 Gew.-% und 70 Gew.-% zugesetzt.

Üblicherweise enthalten derartige Tinten auch zumindest einen Viskositätsregler. Es ist dabei von Vorteil, wenn ein Mengenverhältnis der Gesamtmenge an Viskositätsregler zur Menge an Zusatz ausgewählt ist aus einem Bereich mit einer unteren Grenze von 0,5 : 1 und einer oberen Grenze von 10 : 1.

Beispiele für Viskositätsregler, die allesamt kommerziell erhalten werden können, sind hochviskose organische Verbindungen, wie z.B. Polypropylenglykole, Polyethylenglykole, acrylierte oder sonstig funktionalisierten Derivate von (Poly)propylenglykolen oder (Poly)ethylenglykolen, vernetzbare und unvernetzbare Harze, Polyester, usw.

Im Folgenden werden nur einige bevorzugte Beispiele von Zusammensetzungen des erfindungsgemäßen Zusatz wiedergegeben, da es aufgrund der möglichen Zusammensetzungen im Rahmen der Erfindung den Rahmen dieser Beschreibung sprengen würde, sämtliche anzugeben.

### Beispiel 1:

Einer UV-härtbaren, nicht-wässrigen, Acrylat-basierenden schwarzen Graphiktinte wurden 10 Gew.-% einer 1: 1 : 0.5 : 0.2 Mischung aus Tetraethylorthosilikat, 3-Methacryloxypropyltrimethoxysilan, 3-Glycidyloxypropyltrimethoxysilan und 3-Aminopropyltriethoxysilan zugesetzt. Als Viskositätsregler wurden 15 Gew.-% einer 1 : 1 Mischung aus Poly(propylenglycol)diacrylat und hochmolekularem Polypropylenglycol zugesetzt. Um eine hinreichende UV-Vernetzung während des Druckprozesses zu gewährleisten, wurden dieser erfindungsgemäßen Glastinte zusätzlich 5 Gew.-% Irgacure 819^{®} beigemengt. Nach dem Druck auf Standardfensterglas unter Vernetzung mittels einer Standard-UV-Lampe wurde der Glasdruck für 15 Minuten bei 250°C nachgehärtet.

### Beispiel 2:

Einer nicht-wässrigen, Acrylat-basierenden cyan-färbigen Graphiktinte wurden 15 Gew.-% einer 1 : 1 : 0.5 : 0.2 Mischung aus Tetraethylorthosilikat, 3-Methacryloxypropyltrimethoxysilan, 3-Glycidyloxypropyltrimethoxysilan und 3-Aminopropyltriethoxysilan zugesetzt. Als Viskositätsregler wurden 15 Gew.-% einer 1 : 1 Mischung aus Poly(propylenglycol)diacrylat und hochmolekularem Polypropylenglycol zugesetzt. Um eine hinreichende Vernetzung im thermischen Nach-/Aushärtungsschritt zu gewährleisten, wurden dieser erfindungsgemäßen Glastinte zusätzlich 5 Gew.-% Azobisisobutyronitril beigemengt. Nach dem Druck auf Standardfensterglas wurde der Glasdruck für 10 Minuten bei 200°C nachgehärtet.

### Beispiel 3:

Einer UV-härtbaren, nicht-wässrigen, Acrylat-basierenden weißen Graphiktinte wurden 8 Gew.-% einer 1: 1 : 0.5 : 0.2 Mischung aus Tetraethylorthosilikat, 3-Methacryloxypropyltrimethoxysilan, 3-Glycidyloxypropyltrimethoxysilan und 3-Aminopropyltriethoxysilan zugesetzt. Als Viskositätsregler wurden 15 Gew.-% einer 1 : 1 Mischung aus Poly(propylenglycol)diacrylat und hochmolekularem Polypropylenglycol zugesetzt. Nach dem Druck auf Standardfensterglas unter Vernetzung mittels einer Standard-UV-Lampe wurde der Glasdruck für 10 Minuten bei 250°C nachgehärtet.

### Beispiel 4:

Einer UV-härtbaren, nicht-wässrigen, Acrylat-basierenden gelben Graphiktinte wurden 25 Gew.-% einer 1: 1 : 0.5 : 0.2 Mischung aus Tetraethylorthosilikat, 3-Methacryloxypropyltrimethoxysilan, 3-Glycidyloxypropyltrimethoxysilan und 3-Aminopropyltriethoxysilan zugesetzt. Als Viskositätsregler wurden 15 Gew.-% einer 1 : 1 Mischung aus Trimethylolpropantriacrylat und Di(trimethylolpropan)tetraacrylat zugesetzt. Um eine hinreichende UV-Vernetzung während des Druckprozesses zu gewährleisten, wurden dieser erfindungsgemäßen Glastinte zusätzlich 5 Gew.-% Irgacure 819^{®} beigemengt. Nach dem Druck auf Standardfensterglas unter Vernetzung mittels einer Standard-UV-Lampe wurde der Glasdruck für 3 Minuten bei 250°C nachgehärtet.

### Beispiel 5:

Einer nicht-wässrigen, Acrylat-basierenden magenta-farbigen Graphiktinte wurden 20 Gew.-% einer 1: 1 : 0.5 : 0.2 Mischung aus Tetraethylorthosilikat, 3-Methacryloxypropyltrimethoxysilan, 3-Glycidyloxypropyltrimethoxysilan und 3-Aminopropyltriethoxysilan zugesetzt. Als Viskositätsregler wurden 15 Gew.-% einer 1 : 1 Mischung aus Trimethylolpropantriacrylat und Di(trimethylolpropan)tetraacrylat zugesetzt. Um eine hinreichende Vernetzung im thermischen Nach-/Aushärtungsschritt zu gewährleisten, wurden dieser erfindungsgemäßen Glastinte zusätzlich 5 Gew.-% 1,1'-Azobis(cyclohexancarbonitril) beigemengt. Nach dem Druck auf Standardfensterglas wurde der Glasdruck für 10 Minuten bei 200°C nachgehärtet.

### Beispiel 6:

Einer UV-härtbaren, nicht-wässrigen, Acrylat-basierenden schwarzen Graphiktinte wurden 10 Gew.-% einer 1: 1 : 0.5 : 0.2 Mischung aus Tetraethylorthosilikat, 3-Methacryloxypropyltrimethoxysilan, 3-Glycidyloxypropyltrimethoxysilan und 3-Aminopropyltriethoxysilan zugesetzt. Als Viskositätsregler wurden 5 Gew.-% einer 1 : 1 Mischung aus Polyisopren-*graft*-maleinsäuremonomethylester, Poly(methylvinylether-*alt-*maleinsäuremonobutylester) zugesetzt. Um eine hinreichende UV-Vernetzung während des Druckprozesses zu gewährleisten, wurden dieser erfindungsgemäßen Glastinte zusätzlich 5 Gew.-% Irgacure 819^{®} beigemengt. Nach dem Druck auf Standardfensterglas unter Vernetzung mittels einer Standard-UV-Lampe wurde der Glasdruck für 15 Minuten bei 250°C nachgehärtet.

Die Beispielsformulierungen wurden eine kommerziell erhältliche Tinte zugesetzt.

Der Anteil des Silan-hältigen Zusatzes betrug dabei für Beispiel 1 10 Gew.-%, für Beispiel 2 15 Gew.-%, Beispiel 3 8 Gew.-%, für Beispiel 4 25 Gew.-%, für Beispiel 5 20 Gew.-% und für Beispiel 6 10 Gew.-%.

Diese Tintenformulierungen wurden auf ein handelsübliches Glas mit einem kommerziell erhältlichen Tintenstrahldrucker aufgedruckt und mittels UV-Licht (siehe Beispiel 1, 3, 4 und 6) fixiert. Im Falle von Tintenmischungen mit thermischen Initiatoren (siehe Beispiel 2 und 5) kann eine UV-Fixierung entfallen und eine vollständige Aushärtung im thermischen Nachbehandlungsschritt erfolgen.

Die Kratzfestigkeit der Glasdrucke wurde mittels Gitterschnitt-Test bzw. Scotch-Tape-Test beprobt, wobei eine hervorragende Haftung und Kratzfestigkeit für alle Druckmuster festgestellt wurde.

Im Rahmen der Erfindung besteht die Möglichkeit, dass der Zusatz vorgemischt der Tinte beigemischt wird, oder dass die einzelnen Komponenten der Tinte zugegeben werden.

Zur Erhöhung des Vernetzungsgrades besteht die Möglichkeit, dass der Tinte Initiatoren beigemengt werden, insbesondere UV- oder thermische Initiatoren, wie voranstehend ausgeführt.

Im Fall des Zusatzes zumindest eines thermischen Initiators kann eine Nachbehandlung bei einer Temperatur zwischen 100 °C und 250 °C durchgeführt werden, insbesondere für eine Zeit zwischen 30 Sekunden und 15 Minuten.

Für den Fall, dass ein UV-Initiator verwendet wird, wird nach dem Bedrucken eine Bestrahlung mit UV-Licht durchgeführt, insbesondere für eine Zeit zwischen 1 Sekunde und 10 Sekunden.

Es besteht weiters die Möglichkeit, dass sowohl ein thermischer als auch ein UV-Initiator zugesetzt werden.

Der Anteil des zumindest einen Initiators an der Tinte kann zwischen 0,5 Gew.-% und 25 Gew.-% betragen.

Es wurde hierzu Beispiel 1 mit Irgacure 819^{®} als Initiator wiederholt und die Messungen entsprechend voranstehenden Angaben durchgeführt. Es wurde dabei festgestellt, dass unter 0.5 Gew.-% eine unzureichende Vernetzung auftritt, während bei Initiatormengen über 25 Gew.-%, insbesondere 10 Gew.-%, es zu keiner nennenswerten Verbesserung des Vernetzungsgrades kommt.

Während des Druckens von mindestens einer Farbe kann eine Fixierung der Tintentropfen durch UV-Licht oder thermisches Pinning erfolgen. Es ist bei einer hinreichenden Vorfixierung (z.B. durch UV- oder thermisches Pinning) der Tintentropfen der simultane Druck mehrerer Farben möglich.

## Patentansprüche

1. Haftungsvermittelnder Zusatz für eine Tinte zum Bedrucken von Glas umfassend ein Silan mit einer Methacrylsäuregruppe, und zumindest einen Netzwerkbildner auf Basis eines organischen Esters der o-Kieselsäure, **dadurch gekennzeichnet, dass** zwei weitere Silane enthalten sind, die als funktionelle Gruppe eine Epoxid- bzw. eine Aminogruppe aufweisen, wobei ein Mengenverhältnis dieser Silane mit der Epoxid-, der Amino- bzw. der Methacrylsäuregruppe ausgewählt ist aus einem Bereich von 1 : 0,1 : 50 bis 1 : 1 : 1.

2. Zusatz nach Anspruch 1, **dadurch gekennzeichnet, dass** der Ester der o-Kieselsäure ausgewählt ist aus einer Gruppe von Verbindungen der allgemeinen Formel SiO₄R^{u}R^{v}R^{w}R^{x}, wobei R^{v}, R^{w}, R^{x} jeweils gebildet sind durch H oder eine C₁-C₈ Gruppe und R^{u} eine C₁-C₈ Gruppe ist.

3. Zusatz nach Anspruch 1 oder 2, **dadurch gekennzeichnet, dass** der Anteil des Esters der o-Kieselsäure ausgewählt ist aus einem Bereich mit einer unteren Grenze von 1 Gew.-% und einer oberen Grenze von 90 Gew.-%.

4. Zusatz nach einem der Ansprüche 1 bis 3, **dadurch gekennzeichnet, dass** ein Teil des Esters der o-Kieselsäure durch ein organisches Polymer oder dessen monomere Vorstufe ersetzt ist.

5. Zusatz nach Anspruch 4, **dadurch gekennzeichnet, dass** das organische Polymer ausgewählt ist aus einer Gruppe umfassend Acrylate, Silikone, Polyurethane, Polyamidharze, Polyimidharze.

6. Zusatz nach Anspruch 4 oder 5, **dadurch gekennzeichnet, dass** der Anteil des organischen Polymers ausgewählt ist aus einem Bereich mit einer unteren Grenze von 0,5 Gew.-% und einer oberen Grenze von 50 Gew.-%.

7. Zusatz nach einem der Ansprüche 1 bis 6, **dadurch gekennzeichnet, dass** die funktionelle Gruppe endständig am Silan angeordnet ist.

8. Zusatz nach einem der Ansprüche 1 bis 7, **dadurch gekennzeichnet, dass** die Silane durch 3-Glycidyloxypropyltrimethoxysilan und 3-Aminopropyltriethoxysilan und 3-Methacryloxypropyltrimethoxysilan gebildet ist.

9. Zusatz nach einem der Ansprüche 1 bis 8, **dadurch gekennzeichnet, dass** der Anteil der Silane ausgewählt ist aus einem Bereich mit einer unteren Grenze von 1 Gew.-% und einer oberen Grenze von 80 Gew.-%.

10. Zusatz nach einem der Ansprüche 1 bis 9, **dadurch gekennzeichnet, dass** zumindest ein UV-Initiator und/oder ein thermischer Initiator enthalten ist.

11. Zusatz nach Anspruch 10, **dadurch gekennzeichnet, dass** der zumindest eine Initiator in einem Anteil enthalten ist, der ausgewählt ist aus einem Bereich mit einer unteren Grenze von 0,5 Gew.-% und einer oberen Grenze von 25 Gew.-%.

12. Zusatz nach einem der Ansprüche 1 bis 11, **dadurch gekennzeichnet, dass** zumindest ein Tensid enthalten ist.

13. Zusatz nach Anspruch 12, **dadurch gekennzeichnet, dass** der Anteil des Tensids ausgewählt ist aus einem Bereich mit einer unteren Grenze von 0,5 Gew.-% und einer oberen Grenze von 50 Gew.-%.

14. Tinte zumindest umfassend ein Lösungsmittel, ein Bindemittel und ein Pigment, **dadurch gekennzeichnet, dass** diese einen Zusatz nach einem der vorhergehenden Ansprüche enthält.

15. Tinte nach Anspruch 14, **dadurch gekennzeichnet, dass** der Zusatz in einem Anteil enthalten ist, der ausgewählt ist aus einem Bereich mit einer unteren Grenze von 5 Gew.-% und einer oberen Grenze von 70 Gew.-%.

16. Tinte nach Anspruch 14 oder 15, **dadurch gekennzeichnet, dass** zumindest ein Viskositätsregler enthalten ist, wobei ein Mengenverhältnis der Gesamtmenge an Viskositätsregler zur Menge an Zusatz ausgewählt ist aus einem Bereich mit einer unteren Grenze von 0,5 : 1 und einer oberen Grenze von 10 : 1.

17. Verfahren zum Bedrucken einer Oberfläche eines Glases mit einem Tintenstrahldrucker, wobei Tinte in Form von Tröpfchen auf die Oberfläche des Glases aufgebracht wird, **dadurch gekennzeichnet, dass** eine Tinte nach Anspruch 14 bis 16 verwendet wird.

18. Verfahren nach Anspruch 17, **dadurch gekennzeichnet, dass** die Tinte nach dem Auftragen auf die Oberfläche des Glases thermisch und/oder mittels UV-Strahlung fixiert oder gehärtet wird.

19. Verfahren nach Anspruch 18, **dadurch gekennzeichnet, dass** die thermische Nachhärtung über eine Zeitdauer durchgeführt wird, die ausgewählt ist aus einem Bereich mit einer unteren Grenze von 30 Sekunden und einer oberen Grenze von 15 Minuten.

20. Verfahren nach Anspruch 18 oder 19, **dadurch gekennzeichnet, dass** die thermische Nachhärtung bei einer Temperatur durchgeführt wird, die ausgewählt ist aus einem Bereich mit einer unteren Grenze von 100 °C und einer oberen Grenze von 250 °C.

21. Verwendung eines Zusatzes als Beimengung zu einer Tinte für den Tintenstrahldruck, **dadurch gekennzeichnet, dass** der Zusatz nach einem der Ansprüche 1 bis 13 ausgebildet ist.

## Claims

1. Adhesion-promoting additive for an ink for printing glass, comprising a silane with a methacrylic acid group and at least one reticulating agent based on an organic ester of o-silica, **characterised in that** it contains two other silanes comprising an epoxide group and an amino group as the functional group, and the ratio of these silanes to the epoxide, amino or methacrylic acid group is selected from a range of 1 : 0.1 : 50 to 1 : 1 : 1.

2. Additive as claimed in claim 1, **characterised in that** the ester of o-silica is selected from a group of compounds with the general formula SiO₄R^{u}R^{v}R^{w}R^{x}, where R^{v}, R^{w}, R^{x} are formed respectively by H or a C₁-C₈ group and R^{u} is a C₁-C₈ group.

3. Additive as claimed in claim 1 or 2, **characterised in that** the proportion of ester of o-silica is selected from a range with a lower limit of 1 % by weight and an upper limit of 90 % by weight.

4. Additive as claimed in one of claims 1 to 3, **characterised in that** a portion of the ester of o-silica is replaced by an organic polymer or its monomer pre-stage.

5. Additive as claimed in claim 4, **characterised in that** the organic polymer is selected from a group comprising acrylates, silicones, polyurethanes, polyamide resins, polyimide resins.

6. Additive as claimed in claim 4 or 5, **characterised in that** the proportion of organic polymer is selected from a range with a lower limit of 0.5 % by weight and an upper limit of 50% by weight.

7. Additive as claimed in one of claims 1 to 6, **characterised in that** the functional group is disposed terminally on the silane.

8. Additive as claimed in one of claims 1 to 7, **characterised in that** the silane is 3-glycidyloxypropyltrimethoxy silane and 3-amninopropyltriethoxy silane and 3-methacryloxypropyltrimethoxy silane.

9. Additive as claimed in one of claims 1 to 8, **characterised in that** the proportion of silane is selected from a range with a lower limit of 1 % by weight and an upper limit of 80 % by weight.

10. Additive as claimed in one of claims 1 to 9, **characterised in that** it contains at least one UV-initiator and/or a thermal initiator.

11. Additive as claimed in claim 10, **characterised in that** the proportion of the at least one initiator is selected from a range with a lower limit of 0.5 % by weight and an upper limit of 25% by weight.

12. Additive as claimed in one of claims 1 to 11, **characterised in that** it contains at least one surfactant.

13. Additive as claimed in claim 12, **characterised in that** the proportion of surfactant is selected from a range with a lower limit of 0.5 % by weight and an upper limit of 50 % by weight.

14. Ink comprising at least a solvent, a binding agent and a pigment, **characterised in that** it contains an additive as claimed in one of the preceding claims.

15. Ink as claimed in claim 14, **characterised in that** the proportion of additive is selected from a range with a lower limit of 5 % by weight and an upper limit of 70 % by weight.

16. Ink as claimed in claim 14 or 15, **characterised in that** it contains at least one viscosity regulator, and a ratio of the total quantity of viscosity regulator to the quantity of additive is selected from a range with a lower limit of 0.5 : 1 and an upper limit of 10 : 1.

17. Method of printing a surface of a glass with an inkjet printer, whereby ink is applied to the surface of the glass in the form of drops, **characterised in that** an ink as claimed in claim 14 to 16 is used.

18. Method as claimed in claim 17, **characterised in that**, having been applied to the surface of the glass, the ink is fixed or cured thermally and/or by means of UV radiation.

19. Method as claimed in claim 18, **characterised in that** the thermal post-curing is conducted over a period selected from a range with a lower limit of 30 seconds and an upper limit of 15 minutes.

20. Method as claimed in claim 18 or 19, **characterised in that** the thermal post-curing is conducted at a temperature selected from a range with a lower limit of 100°C and an upper limit of 250°C.

21. Use of an additive as an admixture to an ink for inkjet printing, **characterised in that** the additive is as claimed in one of claims 1 to 13.

## Revendications

1. Additif promoteur d'adhérence pour une encre d'impression de verre comprenant un silane avec un groupe acide méthacrylique et au moins un formateur de réseau à base d'un ester organique de l'acide silicique, **caractérisé en ce que** deux autres silanes sont contenus, qui comprennent, en tant que groupe fonctionnel, un groupe époxyde ou amine, un rapport entre ces silanes et le groupe époxyde, amine ou acide méthacrylique étant sélectionné dans un intervalle de 1:0,1:50 à 1:1:1.

2. Additif selon la revendication 1, **caractérisé en ce que** l'ester de dioxyde de silicium est sélectionné dans un groupe de composés de formule générale SiO₄R^{U}R^{V}R^{W}R^{X}, R^{V}, R^{W}, R^{X} étant constitués de H ou d'un groupe C₁ - C₈ et R^{U} étant un groupe C₁ - C₈.

3. Additif selon la revendication 1 ou 2, **caractérisé en ce que** la proportion d'ester d'acide silicique est sélectionnée dans un intervalle avec une limite inférieure de 1% en poids et une limite supérieure de 90% en poids.

4. Additif selon l'une des revendications 1 à 3, **caractérisé en ce qu'**une partie de l'ester d'acide silicique est remplacée par un polymère organique ou de son précurseur monomère.

5. Additif selon la revendication 4, **caractérisé en ce que** le polymère organique est sélectionné dans un groupe comprenant des acrylates, des silicones, des polyuréthanes, des résines polyamides, des résines polyimides.

6. Additif selon la revendication 4 ou 5, **caractérisé en ce que** la proportion de polymère organique est sélectionnée dans un intervalle avec une limite inférieure de 0,5% en poids et une limite supérieure de 50% en poids.

7. Additif selon l'une des revendications 1 à 6, **caractérisé en ce que** le groupe fonctionnel est situé en fin de chaîne sur le silane.

8. Additif selon l'une des revendications 1 à 7, **caractérisé en ce que** les silanes sont constitués de 3-glycidyloxypropyltriméthoxysilane et de 3-aminopropyltriéthyoxysilane et de 3-méthacryloxypropyltriméthoxysilane.

9. Additif selon l'une des revendications 1 à 8, **caractérisé en ce que** la proportion de silanes est sélectionnée dans un intervalle avec une limite inférieure de 1% en poids et une limite supérieure de 80% en poids.

10. Additif selon l'une des revendications 1 à 9, **caractérisé en ce qu'**il contient au moins un initiateur UV et/ou un initiateur thermique.

11. Additif selon la revendication 10, **caractérisé en ce qu'**il contient au moins un initiateur dans une proportion sélectionnée dans un intervalle avec une limite inférieure de 0,5% en poids et une limite supérieure de 25% en poids.

12. Additif selon l'une des revendications 1 à 11, **caractérisé en ce qu'**il contient au moins un tensio-actif.

13. Additif selon la revendication 10, **caractérisé en ce que** la proportion de tensio-actif est sélectionnée dans un intervalle avec une limite inférieure de 0,5% en poids et une limite supérieure de 50% en poids.

14. Encre comprenant au moins un solvant, un liant et un pigment, **caractérisée en ce qu'**elle contient un additif selon l'une des revendications précédentes.

15. Encre selon la revendication 14, **caractérisée en ce que** l'additif est présent dans une proportion sélectionnée dans un intervalle avec une limite inférieure de 5% en poids et une limite supérieure de 70% en poids.

16. Encre selon la revendication 14 ou 15, **caractérisée en ce qu'**elle contient au moins un régulateur de viscosité, le rapport entre la quantité totale de régulateur de viscosité et la quantité d'additif étant sélectionné dans un intervalle avec une limite inférieure de 0,5:1 et une limite supérieure de 10:1.

17. Procédé d'impression d'une surface de verre avec une imprimante à jet d'encre, de l'encre étant appliquée à la surface du verre sous la forme de gouttelettes, **caractérisé en ce qu'**une encre selon les revendications 14 à 16 est utilisée.

18. Procédé selon la revendication 17, **caractérisé en ce que** l'encre est fixée ou durcie de manière thermique et/ou à l'aide de rayonnement UV après son application à la surface de verre.

19. Procédé selon la revendication 18, **caractérisé en ce que** le durcissement thermique est effectué sur un laps de temps sélectionné dans un intervalle avec une limite inférieure de 30 secondes et une limite supérieure de 15 minutes.

20. Procédé selon la revendication 18 ou 19, **caractérisé en ce que** le durcissement thermique est effectué à une température sélectionnée dans un intervalle avec une limite inférieure de 100°C et une limite supérieure de 250°C.

21. Utilisation d'un additif en tant que charge dans une encre pour l'impression à jet d'encre, **caractérisée en ce que** l'additif est conçu selon les revendications 1 à 13.
